(19) **Europäisches Patentamt / European Patent Office / Office européen des brevets**

(11) **EP 4 621 632 A1**

(12) **EUROPEAN PATENT APPLICATION**
published in accordance with Art. 153(4) EPC

(43) Date of publication:
**24.09.2025 Bulletin 2025/39**

(21) Application number: **24875705.6**

(22) Date of filing: **29.04.2024**

(51) International Patent Classification (IPC):
**G06F 30/27** $^{(2020.01)}$

(86) International application number:
**PCT/CN2024/090644**

(87) International publication number:
**WO 2025/161154 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.02.2024 CN 202410158550**

(71) Applicants:
- **China Three Gorges International Corporation
  Beijing 101100 (CN)**
- **SHANGHAI INVESTIGATION, DESIGN &
  RESEARCH
  INSTITUTE CO., LTD.
  Shanghai 200434 (CN)**

(72) Inventors:
- **ZHENG, Jiangshan
  Shanghai 200434 (CN)**
- **WANG, Ya
  Shanghai 200434 (CN)**
- **LI, Yang
  Shanghai 200434 (CN)**
- **WANG, Xingning
  Shanghai 200434 (CN)**
- **WANG, Bo
  Shanghai 200434 (CN)**

- **LIU, Hezhi
  Shanghai 200434 (CN)**
- **TANG, Yuzhang
  Shanghai 200434 (CN)**
- **YANG, Kai
  Shanghai 200434 (CN)**
- **LIU, Yuanpei
  Shanghai 200434 (CN)**
- **JIANG, Juan
  Shanghai 200434 (CN)**
- **YIN, Jie
  Shanghai 200434 (CN)**
- **YUAN, Yibo
  Shanghai 200434 (CN)**
- **SHAN, Haichao
  Shanghai 200434 (CN)**
- **HUANG, Junjie
  Shanghai 200434 (CN)**
- **LI, Jinxiao
  Shanghai 200434 (CN)**
- **ABUDUREHEMAN, Paerhati
  Shanghai 200434 (CN)**
- **GUO, Yufei
  Shanghai 200434 (CN)**

(74) Representative: **Canzler & Bergmeier
Patentanwälte
Partnerschaft mbB
Despag-Straße 6
85055 Ingolstadt (DE)**

(54) **WIND SPEED PREDICTION METHOD AND SYSTEM, AND ELECTRONIC DEVICE AND MEDIUM**

(57)    A method, system, electronic device, and storage medium for predicting wind speed are provided. The wind speed prediction method includes: constructing a calibration model based on a deep learning model to obtain mesoscale driving field models; selecting the mesoscale driving field models based on the mesoscale driving field models and data information to obtain a selected mesoscale driving field model; obtaining a mesoscale prediction result based on the selected mesoscale driving field model; and interpolating the mesoscale prediction result to obtain a downscaled prediction result. The wind speed prediction method can improve the efficiency of wind speed prediction and obtain a more accurate downscaled wind speed prediction result.

EP 4 621 632 A1

constructing a calibration model based on a deep learning model to obtain mesoscale driving field models — S11

selecting the mesoscale driving field models based on the mesoscale driving field models and data information to obtain a selected mesoscale driving field model — S12

obtaining a mesoscale prediction result based on the selected mesoscale driving field model — S13

interpolating the mesoscale prediction result to obtain a downscaled prediction result — S14

FIG. 2

**Description**

**FIELD OF THE INVENTION**

The present invention belongs to the field of wind speed prediction technologies and relates to a wind speed prediction method, and in particular, to a method, system, electronic device, and storage medium for predicting wind speed.

**BACKGROUND OF THE INVENTION.**

Wind power is closely integrated with the power system. It is essential to consider the fluctuations and intermittency of wind energy, as changes in wind power output can negatively impact the energy quality, safe and stable operation, and economic efficiency of the power system. Wind resource prediction plays a vital role throughout the entire lifecycle of a wind farm, and its importance is self-evident. During the development and construction phase of the wind farm, wind resource prediction serves as an essential decision-making tool. Accurate wind resource prediction can reduce the damage caused by extreme weather events to wind turbines and components, help wind power operators formulate appropriate inspection plans, and allow them to prepare defense plans for severe weather in advance. Compared with onshore wind power, offshore wind resources are more favorable, with higher energy generation efficiency. Therefore, the development of offshore wind power has become one of the most critical battlegrounds for renewable resources. However, due to the limited offshore observation methods and significant spatial and temporal constraints, the lack of measured data makes the evaluation and prediction of offshore wind speed a challenging issue. Therefore, there is still a lack of a high-precision and efficient offshore wind speed prediction method.

**SUMMARY OF THE INVENTION**

A method, system, electronic device, and storage medium for predicting wind speed are provided to solve the problems of low accuracy and inefficiency in existing offshore wind speed prediction techniques.

A first aspect of the present invention provides a wind speed prediction method. The wind speed prediction method includes: constructing a calibration model based on a deep learning model to obtain mesoscale driving field models; selecting the mesoscale driving field models based on the mesoscale driving field models and data information to obtain a selected mesoscale driving field model; obtaining a mesoscale prediction result based on the selected mesoscale driving field model; and interpolating the mesoscale prediction result to obtain a downscaled prediction result.

The embodiments of the present invention can obtain a more accurate downscaling prediction result and improve the efficiency of wind speed prediction by selecting the mesoscale driving field models obtained from the calibration model of the deep learning model using data information to obtain a mesoscale driving field model with higher prediction accuracy, and processing the mesoscale prediction result obtained based on the selected mesoscale driving field model to obtain the downscaled prediction result.

In an implementation of the first aspect, parameters of a loss function of the calibration model include a wind speed difference between adjacent time steps of input data, and the wind speed difference is obtained using a momentum equation.

In an implementation of the first aspect, the parameters of the loss function further include the input data, a model prediction result, and a wind speed difference between adjacent time steps of the model prediction result.

In an implementation of the first aspect, a method for selecting the mesoscale driving field models based on the mesoscale driving field models and data information includes: obtaining a parameter scheme for the mesoscale driving field models based on the data information; obtaining simulated wind speeds of the mesoscale driving field models using the parameter scheme; and selecting the mesoscale driving field models according to the simulated wind speeds and observed wind speeds to obtain the selected mesoscale driving field model.

In an implementation of the first aspect, a method for selecting the mesoscale driving field models according to the simulated and observed wind speeds includes: obtaining root mean squared errors between the simulated and observed wind speeds, and obtaining the selected mesoscale driving field model according to a root mean squared error with the smallest value.

In an implementation of the first aspect, a method for interpolating the mesoscale prediction result includes: obtaining a plurality of interpolation schemes; obtaining downscaled prediction results using the interpolation schemes; performing a scheme selection based on the downscaled prediction results to obtain a selected interpolation scheme; and interpolating the mesoscale prediction result using the selected interpolation scheme to obtain the final downscaled prediction result.

In an implementation of the first aspect, the interpolation schemes include an inverse distance weighting scheme, a bilinear interpolation scheme, a Kriging interpolation scheme, and a radial basis function scheme.

A second aspect of the present invention provides a wind speed prediction system, including a model obtaining module, a model processing module, a prediction result obtaining module, and a downscaled result obtaining module. The model obtaining module is configured to construct a calibration model based on a deep learning model to obtain mesoscale driving field models. The model processing module is configured to select the mesoscale driving field models based on the mesoscale driving field models and data information to obtain a selected mesoscale driving field model. The prediction result obtaining module is configured to obtain a mesoscale prediction result based on the selected mesoscale driving field model. The downscaled result obtaining module is configured to interpolate the mesoscale prediction result to obtain a downscaled prediction result.

A third aspect of the present invention provides an electronic device. The electronic device includes a memory and a processor. The memory is configured to store computer programs. The processor is configured to execute the computer programs stored in the memory so as to enable the electronic device to perform the wind speed prediction method according to the first aspect of the present invention.

A fourth aspect of the present invention provides a computer-readable storage medium, which stores a computer program executed by a processor to implement the wind speed prediction method according to the first aspect of the present invention.

## BRIEF DESCRIPTION OF DRAWINGS

FIG. 1 is a schematic structural diagram of a terminal-cloud interaction scenario according to an embodiment of the present invention;

FIG. 2 is a schematic flowchart of a wind speed prediction method according to an embodiment of the present invention;

FIG. 3 is an exemplary implementation according to an embodiment of the present invention;

FIG. 4 is a schematic flowchart of a method for selecting mesoscale driving field models according to an embodiment of the present invention;

FIG. 5 is a schematic flowchart of a method for obtaining a downscaled prediction result according to an embodiment of the present invention;

FIG. 6 is a schematic structural diagram of a wind speed prediction system according to an embodiment of the present invention; and

FIG. 7 is a schematic structural diagram of an electronic device according to an embodiment of the present invention.

Reference numerals

| | |
|---|---|
| 1 | Terminal-cloud interaction system |
| 10 | Terminal |
| 11 | Cloud server |
| 600 | Wind speed prediction system |
| 610 | Model obtaining module |
| 620 | Model processing module |
| 630 | Prediction result obtaining module |
| 640 | Downscaled result obtaining module |
| 700 | Electronic device |
| 710 | Memory |
| 720 | Processor |
| 730 | Display |
| S11-S14 | Step |
| S121-S123 | Sub-step |
| S141-S143 | Sub-step |

## DETAILED DESCRIPTION

The specific embodiments are described below to illustrate the implementation of the present invention, and those skilled in the art can easily understand other advantages and effects of the present invention from the content disclosed in this specification. The present invention can also be implemented or applied in other specific embodiments. The details provided in this description can be modified or altered in various ways based on different perspectives and applications without departing from the spirit of the present invention. It should be noted that the embodiments and features of the embodiments in the present invention can be combined with each other as long as there is no conflict.

It should be noted that the illustrations provided in the following embodiments are merely schematic representations to explain the basic concepts of this application. Therefore, the figures only show components related to this application and are not drawn according to the actual number, shape, and size of components in practice. The actual implementation may involve variations in the type, quantity, and proportions of the components, and the layout of the components could be more complex.

Numerical weather prediction is the most common wind energy prediction method. For example, a Global Forecast System (GFS) can provide prediction results for major meteorological elements, including wind fields, for the coming days globally. However, due to the imperfections in the parameterization schemes, resolution limitations, and insufficient representation of high-resolution features at the regional scale, global numerical weather prediction systems generally have relatively poor forecasting performance for small-scale regional wind fields. Prediction errors, which are particularly pronounced in nearshore areas, cannot meet the requirements of the actual development and construction of offshore wind power. Currently, most regional high-resolution offshore wind speed predictions are based on mesoscale numerical models, such as the Weather Research and Forecast (WRF) numerical model. The WRF numerical model is a high-resolution, non-static, non-hierarchical, and nonhomogeneous atmospheric numerical model for meteorological forecasting and research. The WRF numerical model is widely used in wind resource simulation and wind speed prediction to simulate atmospheric phenomena by dividing the Earth's atmosphere into horizontal grids and vertical layers and solving the equations of atmospheric dynamics, thermodynamics, and hydrological cycles through discrete equations. The advantage of the WRF numerical model is that the physical processes are clear, and high-resolution regional data can be constructed by representing the local thermodynamic and dynamic processes even with limited observational data. However, the WRF numerical model also faces issues such as significant errors, difficulty in validating prediction results, and high time costs.

Embodiments of the present invention provide a wind speed prediction method. The wind speed prediction method includes: constructing a calibration model based on a deep learning model to obtain mesoscale driving field models; selecting the mesoscale driving field models based on the mesoscale driving field models and data information to obtain a selected mesoscale driving field model; obtaining a mesoscale prediction result based on the selected mesoscale driving field model; and interpolating the mesoscale prediction result to obtain a downscaled prediction result.

The embodiments of the present invention can obtain a more accurate downscaling prediction result and improve the efficiency of wind speed prediction by selecting the mesoscale driving field models obtained from the calibration model of the deep learning model using data information to obtain a mesoscale driving field model with higher prediction accuracy, and processing the mesoscale prediction result obtained based on the selected mesoscale driving field model to obtain the downscaled prediction result.

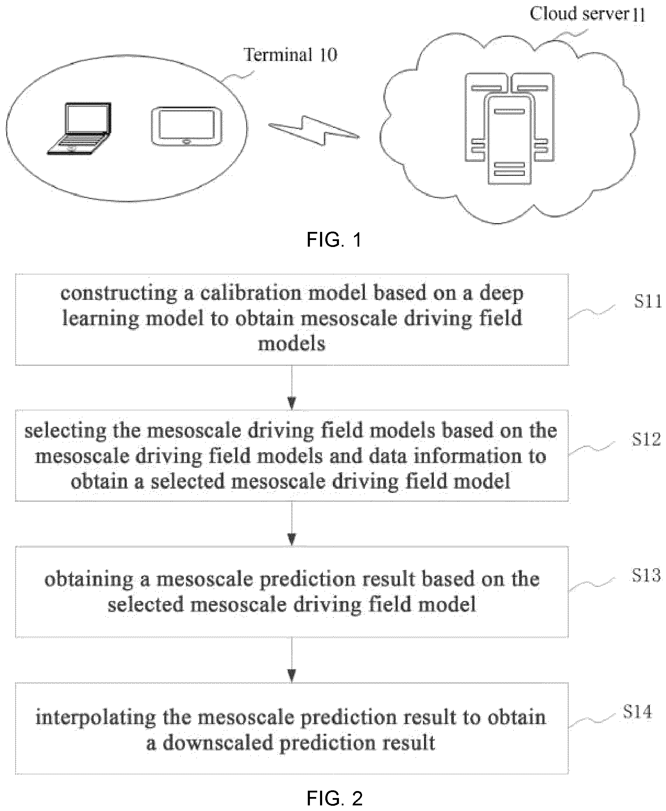

The wind speed prediction method of the present invention can be applied to terminal-cloud interaction scenarios. FIG. 1 is a schematic diagram of a terminal-cloud interaction scenario according to an embodiment of the present invention. As shown in FIG. 1, a terminal-cloud interaction system 1 includes a terminal 10 and a cloud server 11. The terminal 10 and the cloud server 11 can communicate with each other, and the communication methods are not limited to wired or wireless approaches.

The terminal 10 may be mobile or fixed. For example, the terminal 10 may be a wireless terminal or a wired terminal. The wireless terminal may refer to a device with wireless transmission and reception capabilities and may be deployed indoors, outdoors, and offshore wind power stations. The terminal 10 may be a mobile phone, a tablet computer (pad), a laptop computer, or the like, which is not limited herein.

The cloud server 11 may include one or more servers, one or more processing nodes, or one or more virtual machines running on a server. The cloud server 11 may also be referred to as a server cluster, a management platform, a data processing center, or the like, which is not limited to the embodiments of this application.

The following describes the technical solutions in the embodiments of the present invention in detail with reference to the accompanying drawings.

The following embodiments of the present invention provide a wind speed prediction method, which may be implemented, for example, by using the cloud server 11 shown in FIG. 1. FIG. 2 is a schematic flowchart of a wind speed prediction method according to an embodiment of the present invention. As shown in FIG. 2, the wind speed prediction method includes steps S11 to S14.

Step S11: Mesoscale driving field models are obtained by constructing a calibration model based on a deep learning model. The calibration model is based on the deep learning model and is obtained by adjusting the parameters of the deep learning model. The mesoscale driving field models are the Weather Research and Forecast (WRF) numerical models used for meteorological forecasting and research.

Step S12: A selected mesoscale driving field model is obtained by performing model selection based on the mesoscale driving field models and data information. The data information includes multi-source data such as satellite remote sensing data, station observation data, and reanalysis data. Optionally, the reanalysis data is a dataset obtained by performing quality control and assimilation processing on observation data (including observation data from ground stations, satellites, radar, radiosonde, buoys, aircraft, ships, and the like).

Step S13: A mesoscale prediction result is obtained based on the selected mesoscale driving field model. The mesoscale prediction result is a mesoscale wind speed prediction result.

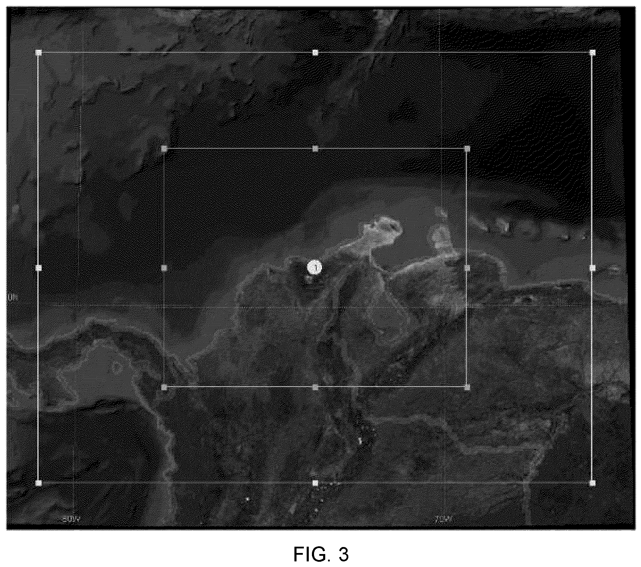

FIG. 3 shows an exemplary implementation according to an embodiment of the present invention. The mesoscale prediction result is obtained by performing a two-layer bidirectional nesting for a target region using the selected mesoscale driving field model. Bidirectional nesting means that a parent region provides a boundary condition for a child region, and a calculation result of the child region is fed back to the parent region. As shown in FIG. 3, the large square represents the parent region, and the small square represents the child region. The central latitude and longitude of the parent region and the child region are the same, for example, 11.10°N and 73.52°W. A grid distance of the parent region is set to 9 kilometers, and a total quantity of grid points is 75922, so that two-layer nesting resolutions of the selected mesoscale driving field model are sequentially 9 kilometers and 3 kilometers, to obtain a prediction result with a high temporalspatial resolution (by hour, 3 to 9 kilometers) of the target region.

It should be noted that the foregoing is only a possible implementation of the embodiments of the present invention, and the present invention is not limited thereto.

Step S14: A downscaled prediction result is obtained by interpolating the mesoscale prediction result.

In the embodiments of the present invention, a mesoscale driving field model with higher prediction accuracy is obtained by selecting the mesoscale driving field models obtained from the calibration model of the deep learning model using data information, and the downscaled prediction result is obtained by processing the mesoscale prediction result obtained based on the selected mesoscale driving field model. This method can obtain a more accurate downscaled prediction result, thereby improving the efficiency of wind speed prediction.

In an embodiment of the present invention, parameters of a loss function of the calibration model include a wind speed difference between adjacent time steps of input data obtained using a momentum equation.

In an embodiment of the present invention, the parameters of the loss function further include the input data, a model prediction result, and a wind speed difference between adjacent time steps of the model prediction result.

In some implementations of the embodiments, the input data is reanalysis data. Data from the global forecast system are collected to serve as driving data for the mesoscale driving field models. Then, global reanalysis data, including European Centre for Medium-Range Weather Forecasts Reanalysis v5 (ERA5) reanalysis data and Finally Opera Global Analysis (FNL) reanalysis data, are collected to construct the calibration model based on the deep learning model in order to further obtain the mesoscale driving field models. During the construction of the calibration model, physical constraints are applied to the wind speed features using the momentum equation. Optionally, the input data of the deep learning model is a data set from global forecast products at two adjacent time steps, and output data of the deep learning model are model prediction results. A calculation formula for the loss function of the deep learning model is:

$$L = \lambda \sum_{i=1}^{i=n} [g_1(x) - y_1] + \sum_{i=1}^{i=n} [g_2(x) - y_2]$$,

where $g_1(x)$ is the prediction result of the deep learning model, $y_1$ is a prediction result of the input data, $g_2(x)$ is the wind speed difference between two adjacent time steps calculated based on the momentum equation, $y_2$ is a difference between two adjacent time steps calculated based on the prediction result of the deep learning model, $i$ is a grid point, and $n$ is a total number of grid points. A calculation method for the wind speed difference between two adjacent time steps based on the momentum equation is:

$$g_2(x) = -(\vec{V} \times \Delta)\vec{V} \pm \frac{1}{\rho}\Delta\rho + \vec{f},$$

where $-(V \times \Delta)\vec{V}$ is a advective term, $\frac{1}{\rho}\Delta\rho$ is a pressure gradient term, and $\vec{f}$ is a Coriolis force term.

In the embodiments of the present invention, the calibration model obtained by constructing the loss function of the deep learning model based on the momentum equation has a stronger constraint effect on the calibration of a lower-level wind speed using the principle of momentum transfer between midto high-level and low-level wind speeds.

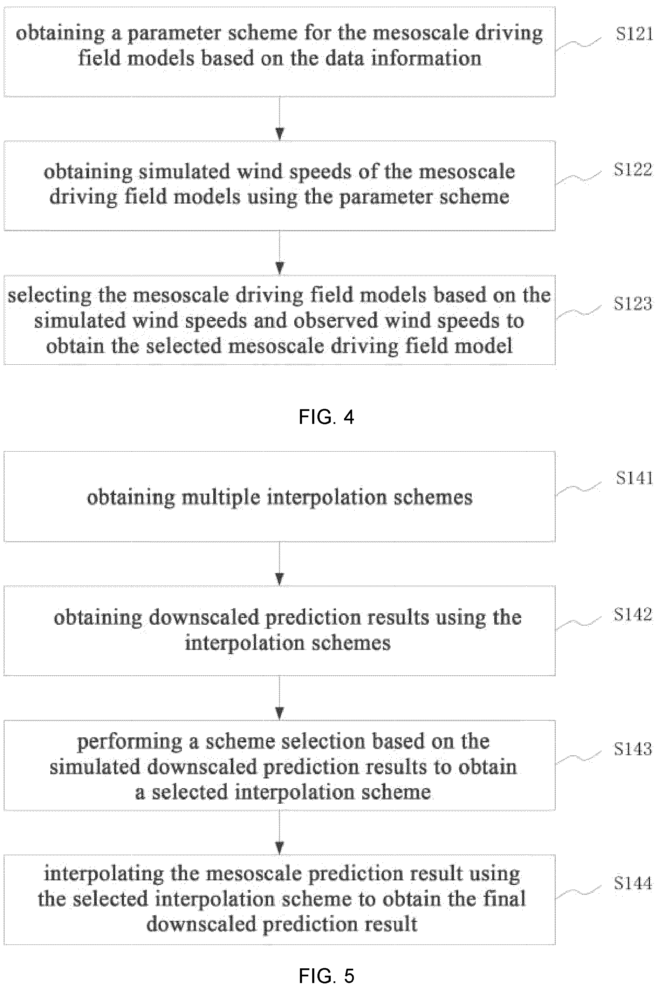

FIG. 4 is a schematic flowchart of a wind speed prediction method according to an embodiment of the present invention. As shown in FIG. 4, step S12 includes sub-steps S121 to S123.

Sub-step S121: A parameter scheme for the mesoscale driving field models is obtained based on the data information. The data information includes the reanalysis data, satellite remote sensing data, and limited station observation data.

Sub-step S122: Simulated wind speeds of the mesoscale driving field models are obtained using the parameter scheme.

Sub-step S123: The selected mesoscale driving field model is obtained by performing model selection according to the simulated wind speeds and observed wind speeds.

In the embodiments of the present invention, the selected mesoscale driving field model based on a multi-source data parameter scheme has higher simulation accuracy, resulting in more precise simulated wind speeds.

In an embodiment of the present invention, a method for performing model selection according to the simulated and observed wind speeds includes: obtaining root mean squared errors between the simulated and observed wind speeds, and obtaining the selected mesoscale driving field model according to a root mean squared error with the smallest value.

In some implementations of the embodiments, the parameter scheme of the mesoscale driving field models is obtained based on the data information, the simulated wind speeds of the mesoscale driving field models are obtained using the parameter scheme, and the selected mesoscale driving field model is obtained by performing model selection according to the simulated and observed wind speeds. Optionally, the root mean squared errors between the simulated and observed wind speeds are calculated by comparing the simulated and observed wind speeds. A calculation formula for the root mean squared errors between the simulated and observed wind speeds is:

$$\text{RMSE} = a \times \sqrt{\sum_{i=1}^{i=n}[M_i - Station_i]^2} + b \times \sqrt{\sum_{i=1}^{i=n}[M_i - Remote_i]^2} + c \times \sqrt{\sum_{i=1}^{i=n}[M_i - Reanalysis_i]^2}$$

where M is an output result of each mesoscale driving field model, *Station* is a station result, *Remote* is remote sensing data, *Reanalysis* is the reanalysis data, *i* is the i-th grid point, and *a*, *b*, and *c* are respective weights for three root mean squared errors.

Optionally, the weights *a*, *b*, and *c* in the calculation formula for the root mean squared errors are 0.6, 0.2, and 0.3, respectively. The selected mesoscale driving field model is obtained according to the parameter scheme with the smallest mean square error. The mesoscale prediction result is obtained based on the selected mesoscale driving field model.

FIG. 5 is a schematic flowchart of a wind speed prediction method according to an embodiment of the present invention. As shown in FIG. 5, step S14 includes the following sub-steps S141 to S144.

Sub-step S141: A plurality of interpolation schemes is obtained.

Sub-step S142: Downscaled prediction results are obtained using the interpolation schemes.

Sub-step S143: A selected interpolation scheme is obtained by performing a scheme selection based on the downscaled prediction results.

Sub-step S144: A final downscaled prediction result is obtained by interpolating the mesoscale prediction results using the selected interpolation scheme. Optionally, the mesoscale prediction result is a wind speed prediction result with a spatial resolution of 3 to 9 kilometers, and the downscaled prediction result is a wind speed prediction result with a spatial resolution of 1 kilometer. The downscaled prediction result at a 1-kilometer scale has a higher prediction accuracy compared to the mesoscale prediction result at a 3 to 9-kilometer scale.

In some implementations of the embodiments, the plurality of interpolation schemes includes an inverse distance weighting scheme, a bilinear interpolation scheme, a Kriging interpolation scheme, and a radial basis function scheme, which is not limited thereto. Spatial interpolation is performed by using the interpolation schemes in a region for which the downscaled prediction result needs to be obtained. Specifically, the root mean squared errors between results, which are obtained by interpolating the mesoscale prediction result from the 3 to 9-kilometer scale to the 1-kilometer scale using different interpolation schemes, and an actual observed wind speed of the selected mesoscale driving field models, are calculated to select an interpolation scheme with the smallest root mean squared error as the selected interpolation scheme. A calculation formula for the root mean squared errors is:

$$RMSE = \sqrt{\sum_{i=1}^{i=n} \left[ Intep_i - WRF\_1km_i \right]^2} \quad ,$$

where $Intep$ is an interpolated result, $WRF\_1km$ is a simulated wind speed result of the selected mesoscale driving field model WRF with the 1-kilometer scale, $i$ is the i-th grid point, and $n$ is the total number of grid points.

In the embodiments of the present invention, the selected interpolation scheme obtained by comparing the kilometer-scale actual observed wind speed of the selected mesoscale driving field model and the simulated wind speeds using the plurality of interpolation schemes enables fast encryption of a region where the downscaled prediction result is needed.

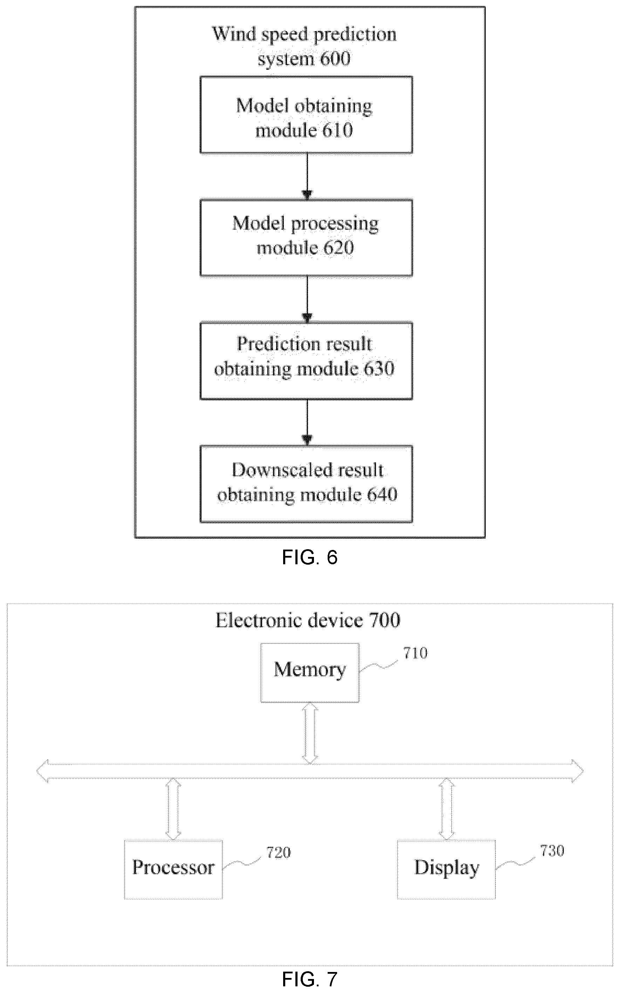

FIG. 6 is a schematic structural diagram of a wind speed prediction system according to an embodiment of the present invention. As shown in FIG. 6, a wind speed prediction system 600 includes a model obtaining module 610, a model processing module 620, a prediction result obtaining module 630, and a downscaled result obtaining module 640.

The model obtaining module 610 is configured to construct a calibration model based on a deep learning model to obtain mesoscale driving field models.

The model processing module 620 is configured to select the mesoscale driving field models based on the mesoscale driving field models and data information to obtain a selected mesoscale driving field model.

The prediction result obtaining module 630 is configured to obtain a mesoscale prediction result based on the selected mesoscale driving field model.

The downscaled result obtaining module 640 is configured to interpolate the mesoscale prediction result to obtain a downscaled prediction result.

It should be noted that the foregoing modules 610 to 640 included in the wind speed prediction system 600 correspond one-to-one with steps S11 to S14 in the wind speed prediction method shown in FIG. 2. Details are not described herein again.

In the embodiments of the present invention, it should be understood that the disclosed system, apparatus, or method may be implemented in other manners. For example, the apparatus embodiments described above are merely illustrative. For example, the division of the modules/units is merely logical function division, and there may be other division manners in actual implementation. For example, a plurality of modules or units may be combined or integrated into another system, or some features may be ignored or not performed. In addition, the displayed or discussed mutual coupling or direct coupling or communication connection may be an indirect coupling or communication connection through some interfaces, devices, modules, or units, and may be electrical, mechanical, or other forms.

The modules/units described as separate parts may or may not be physically separate, and parts displayed as modules/units may or may not be physical modules, may be located in one position, or may be distributed on a plurality of network units. Depending on actual requirements, some or all of the modules/units can be selected to achieve the objectives of the embodiments of the present invention. For example, in the various embodiments of the present invention, the functional modules/units can be integrated into a single processing module, or they can exist physically as separate modules/units, or two or more modules/units can be integrated into one module/unit.

People skilled in the art should be further aware that, in combination with the examples described in the embodiments of the present invention, units and algorithm steps may be implemented by electronic hardware, computer software, or a combination of both. To clearly describe the interchangeability of the hardware and the software, the composition and steps of each example have been generally described in terms of functionality in the above description. Whether the functions are executed in hardware or software depends on specific applications and design constraints of the technical solutions. People skilled in the art may use different methods to implement the described functions for each specific application, but such implementations should not be considered beyond the scope of the present invention.

Embodiments of the present invention further provide an electronic device. FIG. 7 is a schematic structural diagram of an electronic device 700 according to an embodiment of the present invention. As shown in FIG. 7, in this embodiment, an electronic device 700 includes a memory 710 and a processor 720.

The memory 710 is configured to store computer programs. Preferably, the memory 710 includes: a ROM, a RAM, a magnetic disc, a USB flash drive, a memory card, an optical disc, or various other media that can store program code.

Specifically, the memory 710 may include a computer-readable medium in the form of a volatile memory, such as a RAM and/or a cache memory. The electronic device 700 may further include other removable/non-removable, volatile/non-volatile computer system storage mediums. The memory 710 may include at least one program product. The program product includes a set of (e.g., at least one) program modules, which are configured to perform the functions in the embodiments of the present invention.

The processor 720 is connected to the memory 710 and is configured to execute the computer programs stored in the memory 710 so as to enable the electronic device 700 to perform the wind speed prediction method in any embodiment of the present invention.

Optionally, the processor 720 may be a general-purpose processor, including a central processing unit (CPU), a network processor (NP), and the like; and may further be a digital signal processor (DSP), an application specific integrated circuit (ASIC), a field programmable gate array (FPGA) or other programmable logic devices, discrete gates, transistor logic devices, or discrete hardware components.

Optionally, in this embodiment, the electronic device 700 may further include a display 730. The display 730 is communicatively connected to the memory 710 and the processor 720 and is configured to display a graphics user interface (GUI) related to the wind speed prediction method in the embodiments of the present invention.

Embodiments of the present invention further provide a computer-readable storage medium, which stores a computer program executed by a processor to implement the wind speed prediction method in any embodiment of the present invention.

The descriptions of the processes or structures corresponding to the above figures each have their own emphasis. Parts that are not detailed in one process or structure can be referenced in the relevant descriptions of other processes or structures.

The embodiments described above serve merely as illustrative examples of the principles and effects of the present invention, and are not intended to serve as limitations on the invention. Persons skilled in the art may modify or alter these embodiments without departing from the spirit and scope of the present invention. Therefore, any equivalent modifications or alterations made by those skilled in the art, which are consistent with the spirit and technical concepts disclosed in the present disclosure, shall still fall within the scope of the claims of the present invention.

## Claims

1. A wind speed prediction method, comprising:

   constructing a calibration model based on a deep learning model to obtain mesoscale driving field models;
   selecting the mesoscale driving field models based on the mesoscale driving field models and data information to obtain a selected mesoscale driving field model;
   obtaining a mesoscale prediction result based on the selected mesoscale driving field model; and
   interpolating the mesoscale prediction result to obtain a downscaled prediction result.

2. The method according to claim 1, wherein parameters of a loss function of the calibration model include a wind speed difference between adjacent time steps of input data obtained using a momentum equation.

3. The method according to claim 2, wherein the parameters of the loss function further include the input data, a model prediction result, and a wind speed difference between adjacent time steps of the model prediction result.

4. The method according to claim 1, wherein a method for selecting the mesoscale driving field models based on the mesoscale driving field models and data information comprises:

   obtaining a parameter scheme for the mesoscale driving field models based on the data information;
   obtaining simulated wind speeds of the mesoscale driving field models using the parameter scheme; and
   selecting the mesoscale driving field models according to the simulated wind speeds and observed wind speeds to obtain the selected mesoscale driving field model.

5. The method according to claim 4, wherein a method for selecting the mesoscale driving field models according to the simulated and observed wind speeds comprises: obtaining root mean squared errors between the simulated and observed wind speeds, and obtaining the selected mesoscale driving field model according to a root mean squared error with the smallest value.

6. The wind speed prediction method according to claim 1, wherein a method for interpolating the mesoscale prediction result comprises:

   obtaining multiple interpolation schemes;
   obtaining downscaled prediction results using the interpolation schemes;
   performing a scheme selection based on the downscaled prediction results to obtain a selected interpolation scheme; and
   interpolating the mesoscale prediction result using the selected interpolation scheme to obtain the downscaled prediction result.

**7.** The method according to claim 6, wherein the interpolation schemes comprise an inverse distance weighting scheme, a bilinear interpolation scheme, a Kriging interpolation scheme, and a radial basis function scheme.

**8.** A wind speed prediction system, comprising a model obtaining module, a model processing module, a prediction result obtaining module, and a downscaled result obtaining module, wherein:

the model obtaining module is configured to construct a calibration model based on a deep learning model to obtain mesoscale driving field models;
the model processing module is configured to select the mesoscale driving field models based on the mesoscale driving field models and data information to obtain a selected mesoscale driving field model;
the prediction result obtaining module is configured to obtain a mesoscale prediction result based on the selected mesoscale driving field model; and
the downscaled result obtaining module is configured to interpolate the mesoscale prediction result to obtain a downscaled prediction result.

**9.** An electronic device, comprising a memory and a processor, wherein:

the memory is configured to store computer programs; and
the processor is configured to execute the computer programs stored in the memory so as to enable the electronic device to perform the wind speed prediction method according to any one of claims 1 to 7.

**10.** A computer-readable storage medium, wherein the storage medium stores a computer program executed by a processor to implement the wind speed prediction method according to any one of claims 1 to 7.

Cloud server 11

Terminal 10

FIG. 1

constructing a calibration model based on a deep learning model to obtain mesoscale driving field models ⟶ S11

selecting the mesoscale driving field models based on the mesoscale driving field models and data information to obtain a selected mesoscale driving field model ⟶ S12

obtaining a mesoscale prediction result based on the selected mesoscale driving field model ⟶ S13

interpolating the mesoscale prediction result to obtain a downscaled prediction result ⟶ S14

FIG. 2

FIG. 3

obtaining a parameter scheme for the mesoscale driving field models based on the data information — S121

obtaining simulated wind speeds of the mesoscale driving field models using the parameter scheme — S122

selecting the mesoscale driving field models based on the simulated wind speeds and observed wind speeds to obtain the selected mesoscale driving field model — S123

FIG. 4

obtaining multiple interpolation schemes — S141

obtaining downscaled prediction results using the interpolation schemes — S142

performing a scheme selection based on the simulated downscaled prediction results to obtain a selected interpolation scheme — S143

interpolating the mesoscale prediction result using the selected interpolation scheme to obtain the final downscaled prediction result — S144

FIG. 5

Wind speed prediction
system 600

Model obtaining
module 610

Model processing
module 620

Prediction result
obtaining module 630

Downscaled result
obtaining module 640

FIG. 6

Electronic device 700

Memory 710

Processor 720

Display 730

FIG. 7

**TRANSLATION**

### INTERNATIONAL SEARCH REPORT

International application No.

**PCT/CN2024/090644**

| A. | CLASSIFICATION OF SUBJECT MATTER |
|---|---|

G06F 30/27(2020.01)i

According to International Patent Classification (IPC) or to both national classification and IPC

| B. | FIELDS SEARCHED |
|---|---|

Minimum documentation searched (classification system followed by classification symbols)

IPC: G06F 30/-

Documentation searched other than minimum documentation to the extent that such documents are included in the fields searched

Electronic data base consulted during the international search (name of data base and, where practicable, search terms used)

CNTXT, CNKI, 万方, WANFANG: 风场, 风速, 气象, 预测, 预估, 估计, 时刻, 时间, 差分, 差异, 差值, 之差, 订正, 修正, 矫正, 校正, 多个, 多种, 数个, 插值, 内插, 反距离权重, 径向基本函数, 克里金插值, 双线性插值, 参数, 方案, 方法, 临近, 邻近, 相近, 相邻, 筛选, 深度学习, 神经网络, 卷积网络, 数据, 信息, 算法, 损失函数, 损失值, 选取, 选择, 过滤, 中尺度; ENTXT, VEN, Web of Science, IEEE: Data, information, time, wind, speed, Deep learning, mesoscale?, Interpolat+, convolutional network?, Inverse Distance Weight?, select+, adjacent+, loss+, speed?, calculat+, neural network?, differen+, Scheme?, predict +, Method?, field?, filter+, Algorithm?, Radial Basic Function?, estimat+, Kriging Interpolat+, correct+, Bilinear Interpolat+, parameter+

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 116050291 A (MINGYANG SMART ENERGY GROUP CO., LTD.) 02 May 2023 (2023-05-02) description, paragraphs [0063]-[0091] | 1, 4-10 |
| Y | CN 108983320 A (ZHEJIANG UNIVERSITY) 11 December 2018 (2018-12-11) description, paragraphs [0005]-[0028] | 1, 4-10 |
| A | CN 113269421 A (SHENZHEN YISHUITAO TECHNOLOGY CO., LTD.) 17 August 2021 (2021-08-17) entire document | 1-10 |
| A | CN 103473621 A (ZHONGNENG POWER-TECH DEVELOPMENT CO., LTD.) 25 December 2013 (2013-12-25) entire document | 1-10 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 September 2024** | **27 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

TRANSLATION

**INTERNATIONAL SEARCH REPORT**

| International application No. |
| --- |
| **PCT/CN2024/090644** |

C. DOCUMENTS CONSIDERED TO BE RELEVANT

| Category* | Citation of document, with indication, where appropriate, of the relevant passages | Relevant to claim No. |
| --- | --- | --- |
| A | CN 116826847 A (YUNCHENG POWER SUPPLY COMPANY OF STATE GRID SHANXI ELECTRIC POWER COMPANY) 29 September 2023 (2023-09-29) entire document | 1-10 |
| A | CN 116579492 A (MITA CARBON (HANGZHOU) INTELLIGENT TECHNOLOGY CO., LTD.) 11 August 2023 (2023-08-11) entire document | 1-10 |

Form PCT/ISA/210 (second sheet) (July 2022)

TRANSLATION

INTERNATIONAL SEARCH REPORT
Information on patent family members

International application No.

**PCT/CN2024/090644**

| Patent document cited in search report | | | Publication date (day/month/year) | Patent family member(s) | | | Publication date (day/month/year) |
|---|---|---|---|---|---|---|---|
| CN | 116050291 | A | 02 May 2023 | None | | | |
| CN | 108983320 | A | 11 December 2018 | CN | 108983320 | B | 01 September 2020 |
| CN | 113269421 | A | 17 August 2021 | None | | | |
| CN | 103473621 | A | 25 December 2013 | None | | | |
| CN | 116826847 | A | 29 September 2023 | CN | 116826847 | B | 28 November 2023 |
| CN | 116579492 | A | 11 August 2023 | None | | | |

Form PCT/ISA/210 (patent family annex) (July 2022)